# EUROPÄISCHE PATENTANMELDUNG

(11) **EP 1 787 958 A1**
(43) Veröffentlichungstag der Anmeldung: **23.05.2007**
(21) Anmeldenummer: 05025002.6
(22) Anmeldetag: 16.11.2005
(51) Int. Cl.: C01B 33/18

(54) **Trockene Flüssigkeiten, sowie Verfahren zu ihrer Herstellung**

(71) Anmelder: Degussa GmbH, 40474 Düsseldorf (DE)
(72) Erfinder: Pitsch, Holger, 63533 Mainhausen (DE); Piroth, JoSef, 63875 Mespelbrunn (DE); Riedemann, Thomas, 63776 Mömbris (DE); Riedemann, Heike, 63776 Mömbris (DE); Gray, Ann, 63452 Hanau (DE); Huenig, Frank Dieter, 63791 Karlstein (DE)

(57) **Zusammenfassung**

Trockene Flüssigkeiten, enthaltend eine hydrophobe, pyrogen hergestellte Kieselsäure, mit einer Einzelgrößenverteilung von unterhalb 5 µm, werden hergestellt, indem man die Flüssigkeiten und eine hydrophobe, pyrogen hergestellte Kieselsäure durch eine klar definierte, räumlich begrenzte Scherzone führt, in der die Flüssigkeiten zu kleinen Tröpfchen zerschlagen und mit der hydrophoben, pyrogen hergestellten Kieselsäure umhüllt werden.

## Beschreibung

Die Erfindung betrifft trockene Flüssigkeiten, sowie ein Verfahren zu ihrer Herstellung.

Trockene Flüssigkeiten, insbesondere trockenes Wasser, sind bekannt aus US 3,393,155.

Sie bestehen aus pyrogen hergestellter Kieselsäure, die eine mittlere Teilchengröße von nicht größer als 50 Millimikron aufweist, deren Oberfläche hydrophobiert worden ist, und die die 5 bis 10-fache Menge an Flüssigkeit eingekapselt enthalten.

Das Pulver (trockenes Wasser) weist trotz des großen Anteils an Wasser eine pulverförmige Erscheinungsform auf.

Das bekannte trockene Pulver kann hergestellt werden, indem man die Flüssigkeit in feine Tröpfchen zerteilt und diese feinen Tröpfchen mit hydrophobiertem, pyrogen hergestelltem Siliciumdioxid unter hohem Energieeintrag derart vermischt, daß die Tröpfchen der Flüssigkeit vollständig von der hydrophoben Kieselsäure umhüllt werden (US 3,393,155).

Es ist weiterhin bekannt, eine Bohrflüssigkeitskomponente herzustellen, indem man Wasser mit einer hydrophoben, pyrogen hergestellten Kieselsäure unter Hochscherbedingungen vermischt und kombiniert, wobei ein fließfähiges, trockenes, pulverförmiges, festes Produkt erhalten wird.

Das Vermischen kann unter Hochscherbedingungen erfolgen. So kann im Labor eine Hochgeschwindigkeitsmischpumpe oder ein Dispergator verwendet werden.
Im größeren Maßstab kann man einen rotierenden, mit Blättern versehenen Rührer, eine Mischpumpe oder jeden anderen Mischer verwenden, der geeignet ist, hohe Scherenergie in die Mischung einzubringen (US 3,951,824).

Es ist weiterhin bekannt, trockenes Wasser durch Verrühren von Siliciumdioxid mit Wasser herzustellen und als Feuerlöschmittel zu verwenden. Es kann bei tiefen Temperaturen gelagert werden, weil es seine Fließfähigkeit als Pulver selbst bei extrem tiefen Temperaturen nicht verliert (US 5,342,597 und US 4,008,170).

Es ist weiterhin bekannt, trockenes Wasser herzustellen, indem man als Vorrichtungen für die Hochgeschwindigkeitsbewegung der Mischung einen "rocking mixer" oder eine Schüttelvorrichtung verwendet (US 2004/0028710).

Die bekannten Verfahren weisen den Nachteil auf, daß nur relativ kleine Mengen an trockenem Wasser hergestellt werden können.

Weiterhin weisen die bekannten trockenen Flüssigkeiten nur eine begrenzte Lagerstabilität auf.

Es bestand somit die Aufgabe eine trockene Flüssigkeit zu entwickeln, die diese Nachteile nicht aufweist. Zudem ist ein Verfahren zu entwickeln, mit dem größere Mengen an trockenem Wasser hergestellt werden können.

Gegenstand der Erfindung sind trockene Flüssigkeiten, enthaltend eine hydrophobe, pyrogen hergestellte Kieselsäure, welche dadurch gekennzeichnet sind, dass die Einzeltropfengröße unterhalb von 5 µm liegt.

Bevorzugt kann die Einzeltropfengröße im Beriech von 1 bis 4,5 µm liegen.

Ein weiterer Gegenstand der Erfindung sind trockene Flüssigkeiten, enthaltend eine hydrophobe, pyrogene Kieselsäure, welche gekennzeichnet sind, durch die folgenden physikalischen-chemischen Parameter:

**Teilchengrößenverteilung (Agglormeratgrößenverteilung) (Durchgangssumme)**

| | |
|---|---|
| D10% | 80 bis 140 µm |
| D50% | 140 bis 200 µm |
| D90% | 190 bis 340 µm |
| Schüttgewicht DIN 53912 kg/m³ | 400 bis 500 |
| Stampfdichte DIN ISO 787 kg/m³ | 500 bis 600 |
| Feststoffanteil DIN 53 198 % | 4 bis 10 |

Ein weiterer Gegenstand der Erfindung ist ein Verfahren zur Herstellung der trockenen Flüssigkeiten, welches dadurch gekennzeichnet, daß man die Flüssigkeiten und eine hydrophobe, pyrogen hergestellte Kieselsäure durch eine klar definierte, räumlich begrenzte Scherzone führt, in der die Flüssigkeiten zu kleinen Tröpfchen zerschlagen und mit der hydrophoben, pyrogen hergestellten Kieselsäure umhüllt werden.

Die Flüssigkeiten und die hydrophobe, pyrogen hergestellte Kieselsäure können der Scherzone axial zugeführt werden, wobei die erhaltenen trockenen Flüssigkeiten radial aus der Scherzone ausgeführt werden.
Dabei können die Flüssigkeiten und die hydrophobe Kieselsäure in derselben Leitung der Scherzone axial zugeführt werden.

In einer weiteren Ausführungsform der Erfindung können die Flüssigkeiten und die pyrogen hergestellte Kieselsäure der Scherzone in verschiedenen Leitungen axial zugeführt werden.

In einer weiteren Ausführungsform der Erfindung kann die Flüssigkeit mit der hydrophoben, pyrogen hergestellten Kieselsäure in einem Behälter vermischt werden. Diese Mischung kann axial der Scherzone zugeführt werden.

Dabei kann die Mischung durch die die Scherzone bildende Vorrichtung angesogen werden.

Als Vorrichtung, die Scherzonen bilden, können Rotor-Stator-Mischer eingesetzt werden. Ein derartiger Mischer ist beispielsweise bekannt aus Ullmann's Encyclopedia of Industrial Chemistry, 5. Auflage, Band 32, Seite 25-6.

Unter Flüssigkeiten können Wasser, wässrige Salzlösungen, wässrige Lösungen aus Glycerin und ähnliche wassermischbare flüssige Komponenten in Pharmazeutika, Kosmetika etc. verstanden werden.

In einer bevorzugten Ausführungsform der Erfindung kann als Flüssigkeit Wasser eingesetzt werden.

In einer Ausführungsform der Erfindung kann die Scherzone an dem Boden eines konisch gestalteten Behälters angeordnet sein. In dem konisch gestalteten Behälter kann ein Ankerrüher angeordnet sein, mit dem der Transport der hydrophoben pyrogen hergestellten Kieselsäure derart bewerkstelligt werden kann, daß Totzonen vermieden werden können, und das gesamte Gut durch die Scherzone geführt werden kann.

In einer weiteren Ausführungsform der Erfindung kann die erzeugte trockene Flüssigkeit recycliert werden, bis die gesamte vorgelegte Menge an Flüssigkeit in Form der trockenen Flüssigkeit vorliegt.

Die Erfindung weist den Vorteil auf, dass eine trockene Flüssigkeit entwickelt wurde, die eine gute Lagerstabilität aufweist.

### Beispiel 1

Der Rotor-Stator Mischer der Fa. Ystral, die Conti TDS, wurde in zwei verschiedenen Aufbauvarianten getestet.

Zum einen wurde ein offener Behälter mit einem Volumen von brutto 350 1 vorgeschaltet. Der Rohrleitungsdurchmesser zur Verbindung des Vorlagebehälters mit der Conti TDS beträgt dabei sowohl saug- als auch druckseitig 80 mm. Die Länge der Saugleitung beträgt 5 m und beinhaltet drei 90° Krümmer. Die Länge der Druckleitung beträgt 6 m mit vier 90° Krümmern.

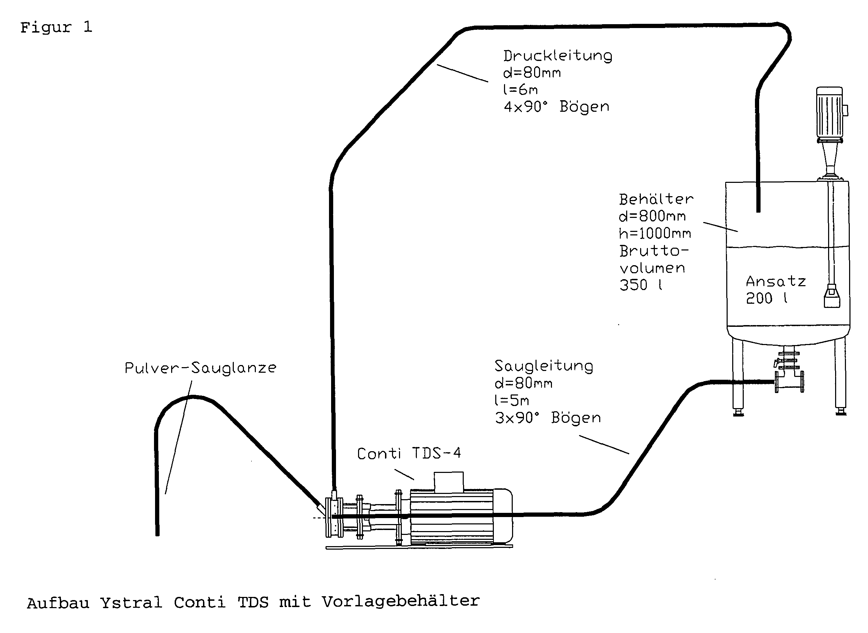

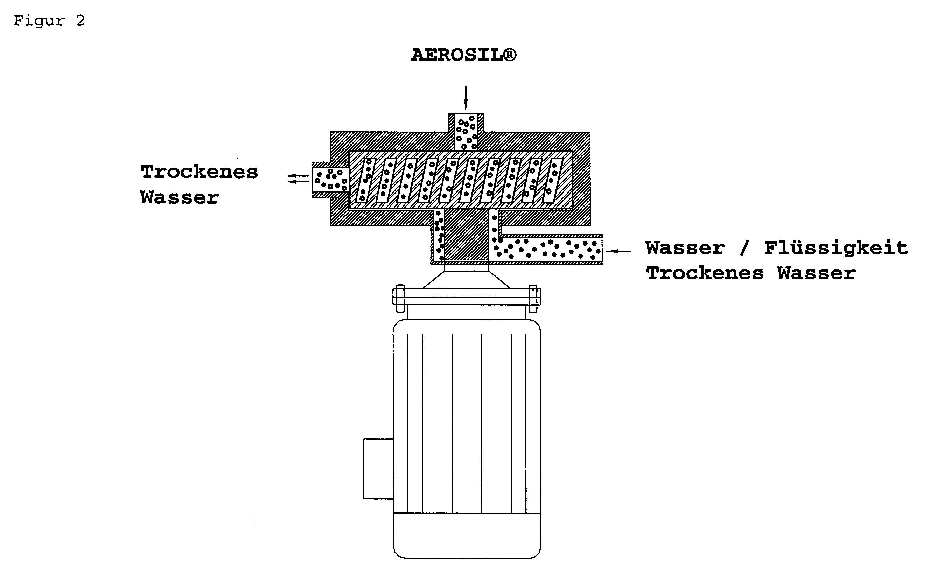

Diese Aufbauvariante ist schematisch in Figur 1 dargestellt. Das Funktionsprinzip Ystral Conti TDS wird schematisch in Figur 2 dargestellt.

Der zweite Versuchsaufbau beinhaltete einen 60 Liter fassenden Vorlagebehälter und kam mit einer Saugleitungslänge von 2 Metern bei 2 St. 90° Krümmern und eine Druckleitung von 3 Metern mit 3 St. 90° Krümmern aus.

Bei der eingesetzten Conti TDS 4 handelte es sich um eine Maschine mit 37 KW. Sie konnte mit einer Geschwindigkeit von 3600 RPM gefahren werden, was bei der vorhandenen Größe der Mischkammer mit einem Durchmesser von 227 mm zu einer Umfangsgeschwindigkeit am inneren Rotor von 29 m/s und am äußeren Rotor von 31 m/s führte.

In dem Vorlagebehälter befand sich jeweils ein Mischorgan, wie beispielsweise ein Ankerrührer, um die Bildung von Totzonen in dem Behälter zu unterbinden.

In den Vorlagebehälter wurden VE-Wasser vorgelegt. Die hydrophobe, pyrogen hergestellte Kieselsäure AEROSIL R812S wurde in einem Originalsack a 10 kg bereitgestellt und die benötigte Menge direkt aus dem Sack mittels Sauglanze der Conti TDS zugeführt. Der von der Conti TDS erzeugte Unterdruck war ausreichend, um das AEROSIL binnen 90 Sekunden einzusaugen. Nach Abschluss der Zugabe wurde das Ansaugventil geschlossen und die Dispergierung solange fortgesetzt, bis die Umsetzung komplett und die gewünschte Qualität erreicht war.

### Beispiel 2:

Der Rotor-Stator-Mischer der Fa. A. Berhrents, Becomix MV60 mit einem Behältervolumen von 60 Litern und einer maximalen Umfangsgeschwindigkeit von 25 m/s, konnte ebenfalls erfolgreich eingesetzt werden. Bei diesem Aufbau ist der Rotor-Sator quasi Teil des Behälters. Er ist direkt an den Behälter, im Boden angebracht. Wasser und die hydrophobe, pyrogen hergestellte Kieselsäure AEROSIL R812S wurden in den Vorlagebehälter eingefüllt. Der im Boden befindliche Rotor-Stator-Mischer sog beides an und führte das Produkt über eine Zirkulationsleitung wieder in den Behälter zurück. Die bei diesem System im Vergleich zu Beispiel 1 schwächere Ansaugleistung wird dadurch kompensiert, daß der Rotor-Stator direkt am Boden des Behälters installiert war. Im Behälter befand sich ein Rührwerk, beispielsweise ein Ankerrührer, welches die Bildung von Totzonen effektiv vermied. Die Mischzeit richtete sich wie auch im Beispiel 1 nach Vollständigkeit der Umsetzung und nach der gewünschten Qualität des Trockenen Wassers.

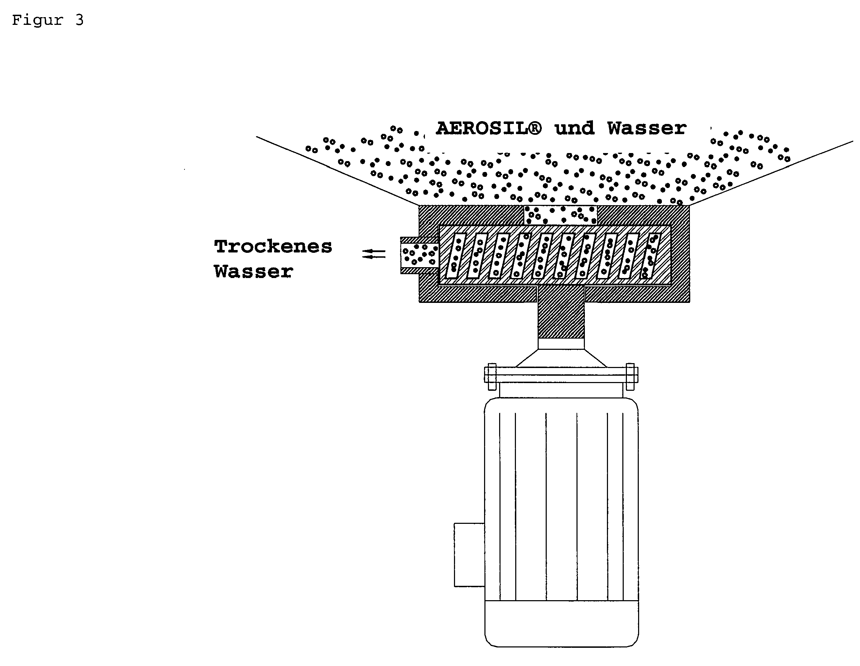

Das Funktionsprinzip dieser Anordnung ist in der Figur 3 schematisch dargestellt.

Beiden Systemen (Ystral und Becomix) ist es gemein, dass die Flüssigkeit und die pyrogen hergestellte Kieselsäure AEROSIL R812S durch eine klar definierte, räumlich begrenzte Scherzone geführt wird, in der die Flüssigkeit zu kleinen Tröpfchen zerschlagen und mit der hydrophoben, pyrogen hergestellten Kieselsäure AEROSIL R812S umhüllt wird. Dies ist der wesentliche Unterschied zu den bekannten Systemen im Labormaßstab. Unabhängig von Ansatzgröße, Behältervolumen und -geometrie kann immer der gleiche Rotor-Stator unter den gleichen Bedingungen benutzt werden. Erfindungsgemäß ist immer sichergestellt, daß die kompletten Edukte vollständig den Scherkräften beim Passieren des Scherfeldes im Rotor-Stator ausgesetzt sind. Der Unterschied der Fließfähigkeit zwischen Flüssigkeit und "Pulver" nach dem Phasenumschlag muß zwar bei der Geometrie des Behälters und des darin befindlichen Mischwerkzeugs zur Vermeidung von Totzonen berücksichtigt werden. Dies hat aber keine Einfluss auf die Wirksamkeit des erfindungsgemäßen Verfahrens. Da die erfindungsgemäß eingesetzten Rotor-Stator-Systeme eine mehr (Ystral) oder weniger (Becomix) starke selbstansaugende Wirkung haben, wird auch nach dem Phasenumschlag noch ein Durchfluß durch die Scherzone erreicht und eine vollständige Umsetzung gewährleistet.

Die exakte Gestaltung der Rotor-Stator-Systeme kann je nach Hersteller und Leistungsspektrum durchaus unterschiedlich sein.

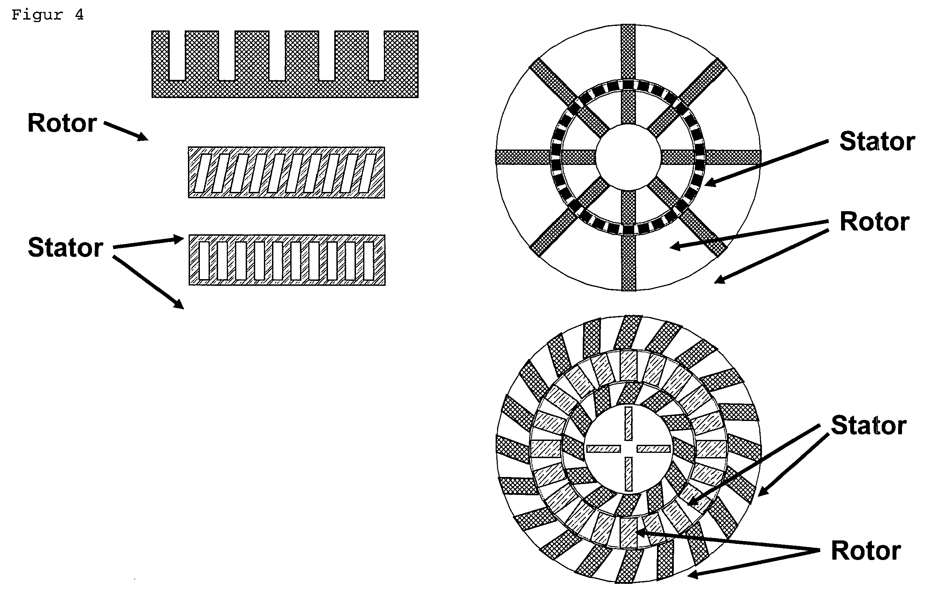

Einige ausgewählte Möglichkeiten für die Gestaltung des Rotor-Stator-Systems sind in Figur 4 schematisch dargestellt.

Es kann sich um verschiedene Anzahl an Rotoren und Statoren handeln, und die detaillierte Ausführung kann durchaus von Hersteller zu Hersteller unterschiedlich sein.

### Beispiel 3:

Mit dem erfindungsgemäßen Verfahren werden trockene Flüssigkeiten hergestellt:
Die einzelnen Bedingungen sind in der Tabelle 1 aufgeführt.

**Tabelle 1:**

| **Versuchsnummer** | **zusammensetzung** | | | **Herstellungs-methode** | **Gesamtmischzeit (min)** | **Umfangsgeschwindigkeit (m/s)** | **Trockenrückstand (%)** |
|---|---|---|---|---|---|---|---|
| | AEROSIL | VE-Wasser | Additiv | | | | |
| 01 | 5% | 95% | 0% | Rotor-Stator Methode A | 15 | 30,6 | 4,8 |
| 02 | 5% | 94,90% | 0,10% | Rotor-Stator Methode A | 10 | 30,6 | 4,8 |
| 03 | 5% | 95% | 0% | Rotor-Stator Methode A | 5 | 30,6 | 5,4 |
| 04 | 5% | 95% | 0% | Rotor-Stator Methode B | 12 | 25,0 | n.b. |
| 05 | 5% | 95% | 0% | Rotor-Stator Methode B | 24 | 25,0 | 4,80 |
| 06 | 5% | 95% | 0% | Rotor-Stator Methode B | 12 | 25,0 | 4,83 |
| 07 | 5% | 95% | 0% | Rotor-Stator Methode B | 14,5 | 25,0 | 4,41 |
| 08 | 5% | 94,90% | 0,10% | Rotor-Stator Methode B | 25,5 | 25,0 | 4,87 |
| 09 | 5% | 94,90% | 0,10% | Rotor-Stator Methode B | 8,5 | 25,0 | 4,88 |
| 10 | 5% | 94,90% | 0,10% | Rotor-Stator Methode B | 16,5 | 25,0 | 5,06 |

**Tabelle 2:**

| | | Bsp.: Rotorstator Fabrikat A | |
|---|---|---|---|
| Teilchengrößenverteilung (Durchgangssumme) | D10% | 104 | 103 |
| | D50% | 152 | 150 |
| | D90% | 233 | 210 |
| Schüttgewicht DIN 53912 [kg/m³] | | 465 | 460 |
| Stampfgewicht DIN/ISO 787 [kg/m³] | | 552 | 449 |
| Feststoffanteil DIN 53198 [%] | | 5,0 | 4,7 |
| Umfangsgeschwindigkeit [m/s] | | 30,6 | 30,6 |
| Flüssige Komponente | | Wasser | Wasser + Additiv |

| | | | |
|---|---|---|---|
| Die Agglomeratgröße wird mittels Camsizer der Firma RETSCH GmbH & Co. KG D-42781 Haan ermittelt. | | | |

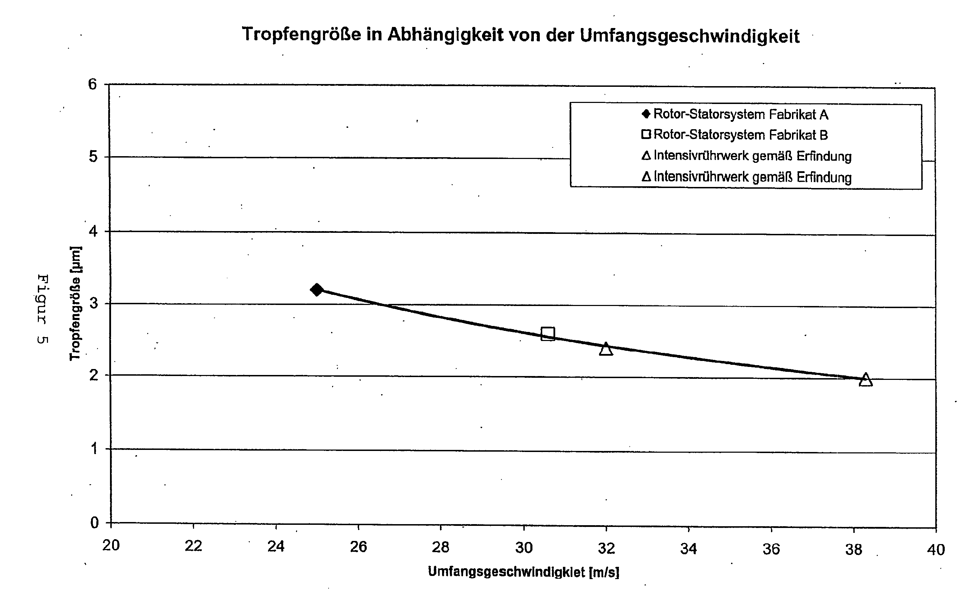

Die Abhängigkeit der Größe der Einzeltropfen von der Umfangsgeschwindigkeit ist in der Figur 5 graphisch dargestellt.

Die Teilchengrößen der Einzeltropfen wird mittels TEM-Analyse (Bildanalyse) an der gefriergetrockneten (kryopräparierten) trockenen Flüssigkeit durchgeführt.

Die Kryo-Präparation erfolgt wie folgt.

Bei der Kryo-Präparation wird zunächst die Kryo-Präparationskammer mit flüssigem Stickstoff auf ca. 100 K abgekühlt. Eine Heizung verdampft bei geöffneter Präparationskammer N₂, sodaß die Präparation in einer trockenen N₂-Atmosphäre erfolgt. Der Präparatehalter wird durch Einfüllen von flüssigem N₂ in das Dewar des Halters ebenfalls auf ca. 100 K abgekühlt.

Für die Präparation 1 wurde "trockenes Wasser" auf ein mit einer dünnen Polymerschicht beschichtetem Präparationsträgernetzchen aufgestäubt und in der tiefgekühlten Präparationskammer auf dem Stück Filterpapier abgelegt und eingefroren.

Für die Präparation 2 wurde in einen Kupferbehälter Ethan verflüssigt. Ein mit "trocknem Wasser" bestäubtes Netzchen wurde in das Ethan eingetaucht. Aufgrund der höheren Wärmekapazität des verflüssigten Ethans wird im Gegensatz zur Präparation 1 hier das Wasser schlagartig, in der Regel amorph, eingefroren. Die Probe kann sich im Gegensatz zur Präparation 1 beim Abkühlen nicht mehr verändern.

Die eingefrorenen Präparate wurden anschließend in den Präparatehalter überführt und in das Transmissionselektronenmikroskop transferiert. Aufgrund des tiefgekühlten Halters können die Präparate im gefrorenen Zustand im TEM analysiert werden.

Die Agglomeratgrößenverteilung wird mittels Camsizer der Firma RETSCH GmbH & Co. KG, D-42781 Haan ermittelt.

## Patentansprüche

1. Trockene Flüssigkeiten, enthaltend eine hydrophobe, pyrogen hergestellte Kieselsäure, **dadurch gekennzeichnet, dass** die Einzeltropfengröße unterhalb von 5 µm liegt.

2. Trockene Flüssigkeiten, enthaltend eine hydrophobe, pyrogen hergestellte Kieselsäure gemäß Anspruch 1, **gekennzeichnet durch** die folgenden physikalischchemischen Parameter:
**Teilchengrößenverteilung (Agglomeratgrößenverteilung) (Durchgangssumme)**
| | |
|---|---|
| D10% | 80 bis 140 µm |
| D50% | 140 bis 200 µm |
| D90% | 190 bis 340 µm |
| Schüttgewicht DIN 53912 kg/m³ | 400 bis 500 |
| Stampfdichte DIN ISO 787 kg/m³ | 500 bis 600 |
| Feststoffanteil DIN 53 198 % | 4 bis 10 |

3. Verfahren zur Herstellung der trockenen Flüssigkeiten gemäß Anspruch 1 oder 2, **dadurch gekennzeichnet, daß** man die Flüssigkeiten und eine hydrophobe, pyrogen hergestellte Kieselsäure durch eine klar definierte, räumlich begrenzte Scherzone führt, in der die Flüssigkeiten zu kleinen Tröpfchen zerschlagen und mit der hydrophoben, pyrogen hergestellten Kieselsäure umhüllt werden.

4. Verfahren nach Anspruch 3, **dadurch gekennzeichnet, daß** man die Flüssigkeiten und die hydrophobe, pyrogen hergestellte Kieselsäure der Scherzone axial zuführt, wobei man die erhaltene trockene Flüssigkeit radial aus der Scherzone ausführt.
